# FASCICULE DE BREVET EUROPEEN

(11) **EP 0 903 688 B1**
(45) Date de publication et mention de la délivrance du brevet: **24.05.2006**
(21) Numéro de dépôt: 98402303.6
(22) Date de dépôt: 17.09.1998
(51) Int. Cl.: G06K 19/07

(54) **Détecteur de signaux radiofréquence pour carte à puce sans contact**
Radiofrequenzsignaldetektor für kontaktlose IC-Karte
Detector of radio frequency signals for contactless IC card

(30) Priorité: 23.09.1997 FR 9711787
(43) Date de publication de la demande: 24.03.1999
(73) Titulaire: STMicroelectronics S.A., 92120 Montrouge (FR)
(72) Inventeur: Roberts, Andrew, 75116 Paris (FR); Subbiotto, Frédéric, 75116 Paris (FR); Donat, Nathalie, 75116 Paris (FR)
(74) Mandataire: Ballot, Paul Denis Jacques

(56) Documents cités:
- EP-A- 0 676 727
- EP-A- 0 791 706
- FR-A- 2 662 876

## Description

L'invention concerne les cartes à puce sans contact dans lesquelles la transmission des données binaires entre l'appareil utilisateur et la carte s'effectue à fréquence radio et, plus particulièrement, dans de telles cartes, un circuit de détection d'une telle transmission en radiofréquence de manière à déterminer avec exactitude qu'il s'agit d'un tel type de transmission.

Dans les cartes à puce sans contact, il est connu de transmettre les données binaires de l'appareil utilisateur vers la carte par l'intermédiaire d'un signal à une fréquence porteuse, de 13,56 Mhz par exemple, qui est modulé en amplitude par les chiffres binaires du code à transmettre.

De telles cartes à puce ne fonctionnent correctement que si elles reconnaissent très rapidement et avec certitude que l'appareil utilisateur communique par l'intermédiaire de signaux radiofréquence de manière à se mettre sur le mode de fonctionnement adapté à ce type de signaux.

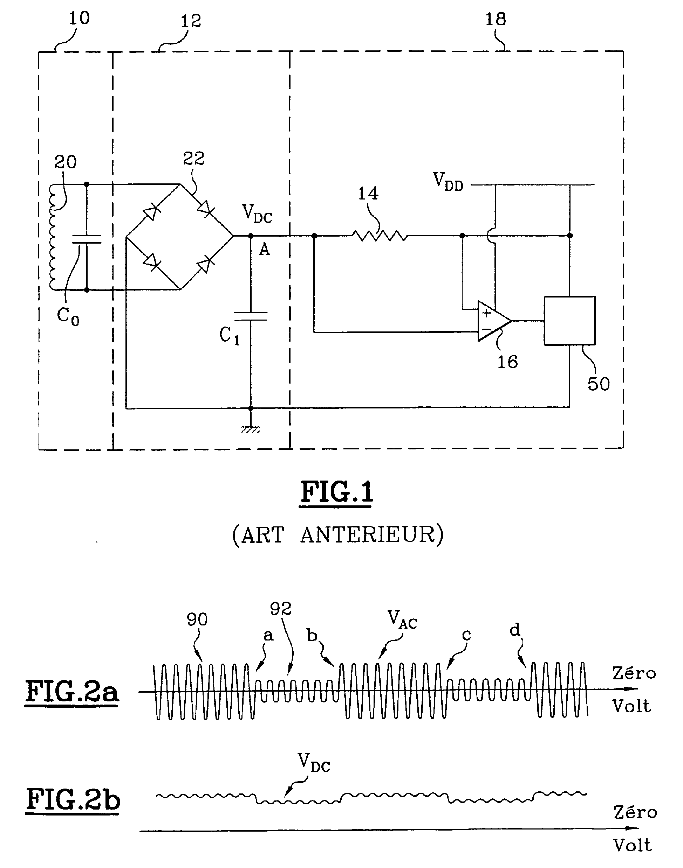

Cette reconnaissance s'effectue à l'aide d'un dispositif électronique du type de celui décrit par le schéma de la figure 1.

Ce dispositif comprend :
- un circuit de détection 10 des signaux radiofréquence constitué par un circuit résonant qui comprend une boucle d'antenne matérialisée par l'enroulement 20 et un condensateur C₀ en parallèle. Ce circuit 10 fournit un signal V_{AC} dont l'allure est donnée par le diagramme de la figure 2-a,
- un circuit de redressement et filtrage 12 constitué d'un pont à quatre diodes 22 suivi d'un condensateur C₁ qui fournit un signal redressé double alternance V_{DC} dont l'allure est donnée par le diagramme de la figure 2-b,
- une résistance 14, et
- un circuit comparateur 16 qui compare les potentiels V_{DC} et V_{DD} aux bornes de la résistance 14.

Le circuit comparateur 16 fournit sur sa borne de sortie un signal V_{RF} indiquant la présence de signaux radiofréquence en modulation binaire d'amplitude. C'est ce signal V_{RF} qui indique au microcontrôleur 50 que le signal transmis à la carte est du type radiofréquence.

Le document EP-A-0 791 706 décrit un circuit de redressement. Il comprend des premier et second transistors formant une première paire de transistors minimisant la chute de tension entre la masse et le substrat du transpondeur. Des troisième et quatrième transistors forment une seconde paire de transistors minimisant la chute de tension entre l'amplitude maximale de la tension alternative et la tension de sortie du circuit de redressement. Les paires de transistors sont commandées par des signaux d'entrée alternatifs. Un circuit de régulation série découple les première et deuxième paires de transistors de charges capacitives du circuit transpondeur.

L'invention a pour but de réaliser un détecteur de signaux radiofréquence pour carte à puce qui détermine avec rapidité et certitude la présence de signaux radiofréquence.

A cet effet, le détecteur selon l'invention utilise les signaux à la fréquence porteuse.

L'invention concerne donc un détecteur de présence de signaux radiofréquence pour carte à puce sans contact suivant les revendications.

D'autres caractéristiques et avantages de la présente invention apparaîtront à la lecture de la description suivante d'un exemple particulier de réalisation, ladite description étant faite en relation avec les dessins joints dans lesquels :
- la figure 1 est un schéma fonctionnel d'un détecteur de signaux radiofréquence selon l'art antérieur,
- les figures 2-a et 2-b sont des diagrammes de signaux à certains points du schéma de la figure 1,
- la figure 3 est un schéma fonctionnel d'un détecteur de signaux radiofréquence pour carte à puce selon l'invention,
- la figure 4 est un schéma de l'un des circuits 28 ou 30 de la figure 3, et
- la figure 5 est un schéma du détecteur de phase 26 de la figure 3.

Dans les différentes figures, les mêmes références indiquent des éléments identiques.

Les figures 1 et 2 ont été décrites dans le préambule pour rappeler l'art antérieur et ne sont pas décrites à nouveau.

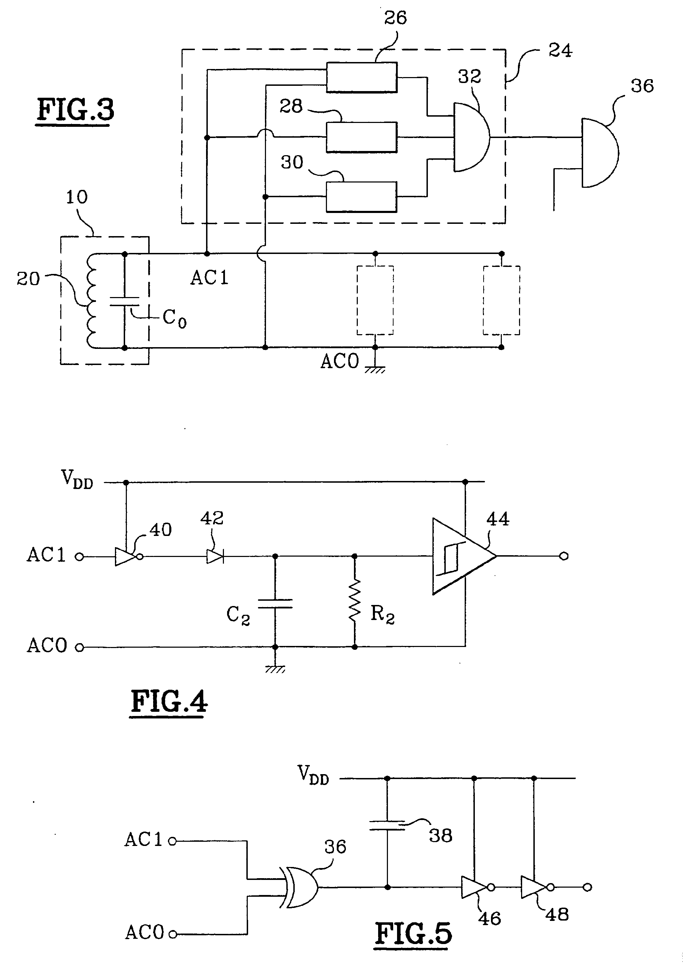

Un détecteur selon l'invention est schématisé par les éléments de la figure 3. Il comprend :
- un circuit de détection 10 du signal transmis par l'appareil utilisateur de la carte à puce (non représentée) qui fournit respectivement les signaux V_{AC1} et V_{AC0} aux extrémités AC1 et AC0 de l'enroulement 22,
- un circuit de détection 24 de la présence de signaux radiofréquence auquel sont appliqués les signaux V_{AC1} et V_{AC0}.

Il est à noter que les signaux V_{AC1} et V_{AC0} peuvent être aussi appliqués à d'autres circuits de la carte à puce, notamment à un circuit de redressement 12 selon le schéma de la figure 1 ou encore à un circuit d'élaboration de la tension d'alimentation de la carte à puce à partir de l'énergie radiofréquence reçue.

Le circuit de détection 24 comprend :
- un circuit détecteur de déphasage 26 dont les deux bornes d'entrée sont connectées respectivement aux extrémités AC1 et AC0 de l'enroulement 20 et dont la borne de sortie est connectée à une première borne d'entrée des trois bornes d'entrée d'un circuit ET 32,
- un premier détecteur 28 de signaux radiofréquence dont la borne d'entrée est connectée à l'extrémité AC1 de l'enroulement 20 et dont la borne de sortie est connectée à la deuxième borne d'entrée du circuit ET 32,
- un deuxième détecteur 30 de signaux radiofréquence dont la borne d'entrée est connectée à l'extrémité AC0 de l'enroulement 20 et dont la borne de sortie est connectée à la troisième borne d'entrée du circuit ET 32,
- le circuit ET 32 dont les trois bornes d'entrée sont connectées comme indiqué ci-dessus et dont la borne de sortie fournit un signal de présence ou non d'un signal radiofréquence.

La borne de sortie du circuit ET 32 peut être connectée directement au microcontrôleur de la carte à puce pour lui indiquer qu'il s'agit d'une transmission on non de données binaires par fréquence radio ou être connectée à une première borne d'entrée d'un circuit ET 34 dont l'autre borne d'entrée est connectée à la borne de sortie du comparateur 16 du schéma de la figure 1.

Le circuit détecteur de déphasage 26 est en fait un détecteur d'opposition de phase entre les signaux V_{AC1} et V_{AC0} qui comprend (figure 5) un OU EXCLUSIF 36 dont les deux bornes d'entrée reçoivent respectivement les signaux V_{AC1} ou V_{AC0}. Il fournit un signal lorsque les deux signaux V_{AC1} ou V_{AC0} sont en opposition de phase.

Un condensateur 38 est connecté entre la tension d'alimentation V_{DD} et la borne de sortie du circuit ou EXCLUSIF 36 pour filtrer les effets des modifications de phase de faible amplitude entre les signaux V_{AC1} et V_{AC0}.

Le signal filtré est appliqué à un circuit de remise en forme comprenant par exemple deux circuits inverseurs 46 et 48.

Chaque circuit détecteur 28 ou 30 comprend :
- un circuit inverseur 40 dont la borne d'entrée est connectée à une extrémité AC1 ou AC0 de l'enroulement 20 selon le détecteur considéré,
- une diode 42 dont l'anode est connectée à la borne de sortie du circuit inverseur 40,
- un condensateur C₂ dont une borne est connectée à la cathode de la diode 42 et dont l'autre borne est connectée à la masse,
- une résistance R₂ montée en parallèle sur le condensateur C₁ et,
- un circuit de basculement 44, du type connu sous le vocable "Trigger de Schmidt" dont la borne d'entrée est connectée au point commun de la résistance R₁, du condensateur C₁ et de cathode de la diode 42.

Le circuit inverseur 40 et le Trigger de Schmit sont alimentés par la tension d'alimentation V_{DD}.

Dans chaque circuit détecteur 28 ou 30 selon le schéma de la figure 4, le circuit inverseur a pour but de transformer le signal à la fréquence porteuse f en un signal carré d'amplitude V_{DD} à la même fréquence. La diode 42 empêche la décharge du condensateur C₂ lorsque la borne de sortie du circuit inverseur 40 est au potentiel de la masse. Le condensateur C₂ et la résistance R₂ réalisent un circuit d'intégration avec décharge au travers de la résistance R₂.

La tension à la borne d'entrée du Trigger de Schmit 44 augmente au fur et à mesure que la fréquence f du signal augmente. En conséquence, son seuil de basculement et les valeurs des composants C₂ et R₂ doivent être choisis pour que les signaux ayant une fréquence supérieure à une certaine valeur soient détectés et réalisent le basculement.

L'invention a été décrite avec un détecteur comprenant un circuit détecteur de déphasage 26 et deux détecteurs radiofréquence 28 et 30 dont les signaux de sortie sont combinés dans les circuits logiques 32,36.

Cependant, un tel détecteur peut fonctionner en n'ayant que certains éléments :
- un seul détecteur 28 ou 30,
- les deux seuls détecteurs 28 et 30, ce qui améliore la certitude de détection par rapport à un seul détecteur,
- un seul détecteur 28 ou 30 avec le détecteur d'opposition de phase,
- enfin, les deux détecteurs 28 et 30 et le détecteur d'opposition de phase comme décrits en relation avec la figure 3..

En outre, les différents montages peuvent être combinés avec le circuit de l'art antérieur de la figure 1 comme indiqué ci-dessus.

## Revendications

1. Détecteur de présence de signaux radiofréquence pour carte à puce sans contact comportant un enroulement d'antenne (10) de réception pour détecter les signaux à la fréquence porteuse f transmis par l'appareil utilisateur de la carte à puce et au moins un circuit de détection (28, 30) de la présence de signaux à la fréquence porteuse f dont la borne d'entrée est connectée à une extrémité (AC1, AC0) de l'enroulement d'antenne (10) ;
- **caractérisé en ce qu'**il comprend en outre :
- un circuit de redressement et filtrage (12) connecté aux extrémités (AC1, AC0) de l'enroulement d'antenne ;
- un circuit détecteur de déphasage (26) ayant deux bornes d'entrée qui sont connectées respectivement aux extrémités (AC1, AC0) de l'enroulement d'antenne (20) ledit circuit détecteur de déphasage fournissant sur sa borne de sortie un signal lorsque les signaux présents sur ses bornes d'entrée sont en opposition de phase, et
- un circuit logique ET (32) ayant au moins deux bornes d'entrée, l'une connectée à la borne de sortie du circuit détecteur de déphasage (26) et l'autre connectée à la borne de sortie de l'un des circuits de détection (28 ou 30).

2. Détecteur selon la revendication 1, **caractérisé en ce que** ledit circuit de détection (28 ou 30) comprend:
- un circuit inverseur (40) dont la borne d'entrée est connectée à une extrémité (AC1, AC0) de l'enroulement d'antenne (20),
- une diode (42) dont l'anode est connectée à la borne de sortie du circuit inverseur (40),
- un circuit d'intégration comprenant un condensateur (C2) et une résistance (R2) en parallèle dont un des points communs est connecté à la cathode de la diode (42), et
- un circuit de basculement (44) dont la borne d'entrée est connectée à la cathode de la diode (42), ledit circuit de basculement changeant d'état lorsque la tension de charge, atteinte par le condensateur (C2) est supérieure à un certain seuil.

3. Détecteur selon la revendication 1 ou 2, **caractérisé en ce que** le circuit détecteur de déphasage (26) comprend :
- un circuit OU EXCLUSIF ayant deux bornes d'entrée qui sont connectées respectivement aux dites extrémités (AC1, AC0) de l'enroulement d'antenne (20), et
- un condensateur (38) connecté à la borne de sortie du circuit OU EXCLUSIF.

## Claims

1. A detector of the presence of radiofrequency signals for contactless chip cards, comprising a reception antenna winding (10) to detect the signals at the carrier frequency f transmitted by the user apparatus of the chip card, and at least one detection circuit (28, 30) to detect the presence of signals at the carrier frequency f, the input terminal of this detection circuit being connected to one end (AC1, AC0) of the antenna winding (10), **characterized in that** is further comprises:
- a rectifying and filtering circuit (12) connected to the ends (AC1, AC0) of the antenna winding;
- a phase-shift detector circuit (26) having two input terminals that are connected respectively to the ends (AC1, AC0) of the antenna winding (20), said phase-shift detector circuit providing, at its output terminal, a signal when the signals present at its input terminals are in phase opposition, and
- an AND logic circuit (32) having at least two input terminals, one connected to the output terminal of the phase-shift detector circuit (26) and the other connected to the output terminal of one of the detection circuits (28 or 30).

2. A detector according to claim 1, wherein said detection circuit (28 or 30) comprises:
- an inverter circuit (40) whose input terminal is connected to one end (AC1, AC0) of the antenna winding (20),
- a diode (42) whose anode is connected to the output terminal of the inverter circuit (40),
- an integration circuit comprising a capacitor (C2) and a resistor (R2) that are parallel-connected, one of their common points being connected to the cathode of the diode (42), and
- a flip-flop circuit (44) whose input terminal is connected to the cathode of the diode (42), said flip-flop circuit changing its state when the charging voltage attained by the capacitor (C2) is greater than a certain threshold.

3. A detector according to claim 1 or 2, wherein the phase-shift detector circuit (26) comprises:
- an EXCLUSIVE-OR circuit having two input terminals that are connected respectively to said ends (AC1, AC0) of the antenna winding (20), and
- a capacitor (38) connected to the output terminal of the EXCLUSIVE-OR circuit.

## Patentansprüche

1. Detektor für das Vorhandensein von Hochfrequenzsignalen für eine kontaktlose Chipkarte, mit einer Wicklung für eine Empfangsantenne (10), um die Signale mit der Trägerfrequenz f zu erfassen, die durch eine Benutzungsvorrichtung für die Chipkarte gesendet werden, und wenigstens einer Erfassungsschaltung (28, 30) für das Vorhandensein von Signalen mit der Trägerfrequenz f, deren Eingangsanschluss mit einem Ende (AC1, AC0) der Antennenwicklung (10) verbunden ist;
- **dadurch gekennzeichnet, dass** dieser ferner umfasst:
- eine Gleichrichtungs- und Filterungsschaltung (12), die an die Enden (AC1, AC0) der Antennenwicklung angeschlossen ist;
- eine Schaltung (26) zur Erfassung einer Phasenverschiebung, die zwei Eingangsanschlüsse aufweist, die jeweils an die Enden (AC1, AC0) der Antennenwicklung (20) angeschlossen sind, wobei die Schaltung zur Erfassung der Phasenverschiebung auf ihrem Ausgangsanschluss ein Signal bereit stellt, wenn sich die auf den Eingangsanschlüssen vorhandenen Signale in Phasenopposition befinden, und
- eine Logik-UND-Schaltung (32), die wenigstens zwei Eingangsanschlüsse aufweist, von denen einer mit dem Ausgangsanschluss der Schaltung (26) zur Erfassung einer Phasenverschiebung verbunden ist und der andere mit dem Ausgangsanschluss einer der Erfassungsschaltungen (28 oder 30) verbunden ist.

2. Detektor nach Anspruch 1, **dadurch gekennzeichnet, dass** die Erfassungsschaltung (28 oder 30) umfasst:
- eine Inverterschaltung (40), deren Eingangsanschluss mit einem Ende (AC 1, AC0) der Antennenwicklung (20) verbunden ist,
- eine Diode (42), deren Anode mit dem Ausgangsanschluss der Inverterschaltung (40) verbunden ist,
- eine Integrationsschaltung mit einem Kondensator (C2) und einem Widerstand (R2) in Parallele, von denen einer der gemeinsamen Punkte mit der Kathode der Diode (42) verbunden ist, und
- eine Wippenschaltung (44), deren Eingangsanschluss mit der Kathode der Diode (42) verbunden ist, wobei die Wippenschaltung den Zustand ändert, wenn die Ladungsspannung, die vom Kondensator (C2) erreicht wird, größer als ein bestimmter Schwellenwert ist.

3. Detektor nach Anspruch 1 oder 2, **dadurch gekennzeichnet, dass** die Schaltung (26) zur Erfassung einer Phasenverschiebung umfasst:
- eine ODER-EXKLUSIV-Schaltung mit zwei Eingangsanschlüssen, die jeweils an die Enden (AC1, AC0) der Antennenwicklung (20) angeschlossen sind, und
- einen Kondensator (38), der an den Ausgangsanschluss der ODER-EXKLUSIV-Schaltung angeschlossen ist.
